# EUROPEAN PATENT SPECIFICATION

(11) **EP 1 120 037 B1**
(45) Date of publication and mention of the grant of the patent: **23.06.2010**
(21) Application number: 01201815.6
(22) Date of filing: 21.02.1996
(51) Int. Cl.: A01K 1/12, A01J 5/017, A01K 13/00

(54) **A construction including an implement for milking animals**
Konstruktion mit Gerät zum Melken von Tieren
Construction avec dispositif pour la traite d'animaux

(30) Priority: 24.02.1995 NL 9500363; 04.10.1995 NL 1001336
(43) Date of publication of application: 01.08.2001
(62) Divisional of application: 96200448.7
(73) Proprietor: MAASLAND N.V., 3147 PA Maassluis (NL)
(72) Inventor: Van der Lely, Cornelis, 6300 Zug (CH)
(74) Representative: Corten, Maurice Jean F.M.

(56) References cited:
- EP-A- 0 189 954
- EP-A- 0 535 754
- EP-A- 0 567 191
- EP-A- 0 595 409
- GB-A- 991 557
- US-A- 3 738 320

## Description

The invention relates to a construction including an implement for milking animals, such as cows, provided with a milk box.

Such constructions are known. The European patent application EP 0 535 754 A1 describes an implement for automatically milking animals with a milking robot. After milking, the udder of a milked animal is automatically sprayed from a spray nozzle arranged on the arm of a milking robot. The after-treating liquid may contain a disinfectant agent.

The invention aims at obtaining an alternative construction.

Therefore the invention relates to a construction including an implement for milking animals, such as cows, provided with a milk box, characterized in that the construction comprises an implement for treating an animal with insecticide and /or skin care means, said implement comprising registration means by means of which there is recorded which animal has been treated with the insecticide and/or skin care means and which animal, on the basis of these data, will be treated again.

By means of the invention the vermin present on or near an animal is controlled in a manner in which a selective treatment of the animals is realized by means of the insecticide and/or skin care means.

In a preferred embodiment according to the invention, an animal is treated with the insecticide and/or skin care means prior to being milked in the milk box. Consequently, the animal will behave calmer in the milk box, which will simplify the connection of the teat cups to the animal's teats. It will be obvious that the above-mentioned implement for treating the animal with an insecticide is adapted to be applied together with a ventilator as well as separately. In the case that both implements are applied together, it is advantageous to bring the insecticide and/or skin care means in the air current of the ventilator by means of the above-described implement.

According to a further inventive feature, the implement includes a milking robot for automatically connecting the teat cups to the teats of an animal to be milked in the milk box.

For a better understanding of the invention and to show how the same may be carried into effect, reference will now be made, by way of example, to the accompanying drawings, in which:
Figure 1 shows, in plan view, a construction including an implement for milking animals, provided with a milk box;
Figure 2 shows a side view of the milk box in Figure 1;
Figure 3 shows a plan view of the milk box according to Figure 2.

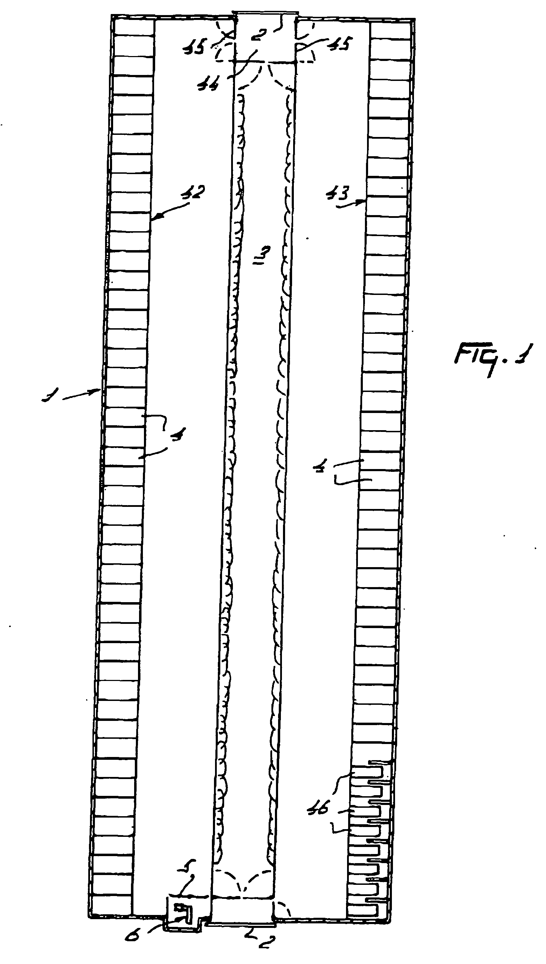

Figure 1 shows, in plan view, a construction including an implement for milking animals provided with a stable or cowshed 1, entrance doors 2, a feed alley 3 and, on both sides, a row of cubicles 4. In the cowshed 1, there is provided at one end, near an entrance door 2, a milk box 5 in which there is schematically indicated a milking robot 6 by means of which the teat cups can be connected automatically, in a usual manner, to the teats of an animal to be milked.

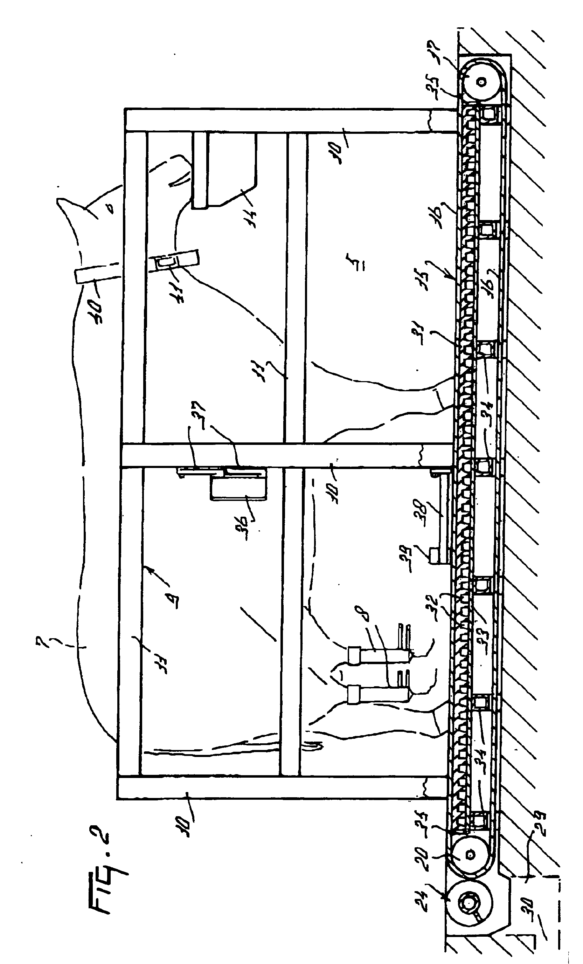

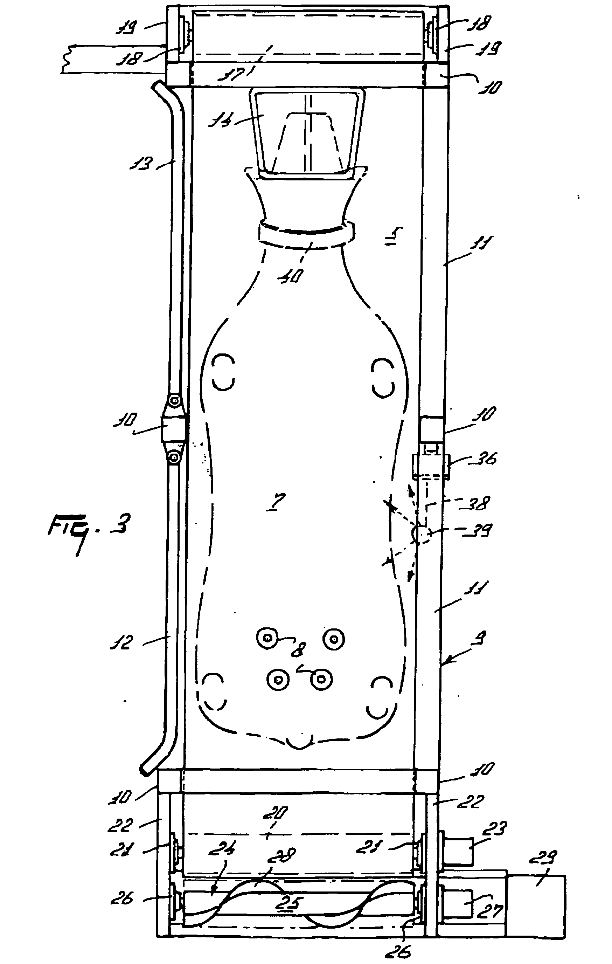

Figure 2 shows, in side view, the milk box 5 according to Figure 1, occupied by a cow 7 whose teats are connected to the teat cups 8. The milk box 5 comprises a fencing 9 including stands 10 interconnected by means of crossbeams 11. As is shown in Figure 3, the milk box 5 is provided at one longitudinal side with an entrance door 12 and an exit door 13. Moreover, at the front side of the milk box 5 there is provided a trough 14 on a crossbeam of the fencing 9, which trough can be used as a drinking or feeding trough for the animal. In addition, the trough 14 is provided with a (non-shown) mixing device by means of which a lure substance, such as treacle, can be added to the fodder or the drinking-water.

Furthermore, the milk box 5 is provided with a floor 15 comprising a conveyer 16 extending over the entire length and width of the milk box. The conveyer 16 is preferably made of a flexible material, such as synthetic material or rubber. Near the front side of the milk box, the conveyer 16 is disposed about a cylindrical roller element 17, which at both ends is bearing-supported in bearings 18 provided in strips 19. The latter strips are each connected with a foremost stand 10 of the fencing 9 (Figure 3). The cylindrical roller element 17, as is shown in Figures 2 and 3, is disposed outside the milk box 5 and below the level of the floor surface of the milk box 5. At the rear side of the milk box 5, there is also provided a cylindrical roller element 20, which on both sides is bearing-supported in bearings 21 provided in strips 22. The latter strips are connected with the rearmost stands 10 of the fencing 9. The conveyer 16 is also disposed about the rearmost roller element 20, which is motor drivable by means of an electromotor 23 provided on the strip 22.

Near the rearmost roller element 20, there is furthermore provided a scraper 24 for the purpose of removing contaminations that might be present on the conveyer 16, such as dung, mud, etc. The scraper 24 comprises an auger 25, which at its two ends is bearing-supported rotatably in bearings 26 provided in the strips 22. The auger 25 is motor drivable by means of an electromotor 27 provided on a strip 22. The auger 25 is arranged at such a distance from the roller element 20 that the comb 28 of the auger moves just along the surface of the conveyer 16. Below the scraper 24, there is furthermore provided a drain 29 which, via a discharge pipe 30, is in communication with a (non-shown) dung cellar.

On the middle stand 10 of a longitudinal side of the milk box 5, there is furthermore provided a medical instrument 36, by means of which the heartbeat, the temperature, the blood pressure, etc. of the cow 7 in the milk box 5 can be measured and supplied to a (non-shown) computer. The medical instrument 36 can be pivoted against the body of the cow 7 about a vertical shaft 37 including a (non-shown) cylinder.

On the middle vertical stand 10, near its lower side, there is provided a horizontal strip 38 including at the end a sensor 39 rotatable about a vertical shaft, by means of which the physical state of the animal's legs is determined. The sensor 39 may be designed as an X-ray machine, an infrared camera, an ultrasound scan, etc. The signal supplied by the sensor 39 is processed in the (non-shown) computer. Moreover, the above-described construction comprises a (non-shown) animal identification system by means of which the identity can be established of an animal having occupied the milk box 5. For that purpose each animal is provided with a collar 40 including a transponder 41. By means of the animal identification system, the data supplied by the medical instrument 36 and the sensor 39 and processed in the computer are kept up to date per animal. By means of the animal identification system there is also ascertained whether or not an animal has left the milk box 5, whereafter the computer supplies a signal to the electromotor 23 and 27, so that the conveyer 16 is put into operation and, by means of the scraper 24, contaminations that might be present on the conveyer are removed. In this way, the next animal to enter the milk box 5 will avail of a clean floor.

Moreover, the milk box 5 may be provided with a spraying device by means of which warm water can be sprayed against the animal's legs, as well as with a ventilator by means of which, after the cleaning of the legs has finished, warm air is blown against the animal's legs.

The function of the above-mentioned construction including the implement for milking animals will be explained in what follows.

The cowshed 1 is adapted to accommodate a group of cows and to milk same automatically by means of the milking robot 6. After having taken bulkage from the feed alley 3, the animals wish to ruminate same and then, in general, assume a horizontal position. The cubicles 4 being provided with flexible floors, they constitute ideal places for the cows to retire and ruminate. Lured by the comfort of the cubicles 4, which, for lying down, is more or less comparable to that of a meadow, the animals looking for a place to lie on will rather choose the cubicles 4 than the relatively hard and cold concrete floor of the cowshed 1. A further advantage is that the flexible floors 46 have an insulating function so that little warmth is withdrawn from the animal's body and consequently the risk of getting stiff joints and catching a cold is reduced.

After some time, a large number of the animals present in the cowshed 1, by means of a natural stimulus or habituation, will feel the need to enter the milk box 5 and let themselves be milked automatically by the milking robot 6. After an animal has occupied the milk box 5, there will be supplied concentrate to the animal in the trough 14 by means of a (non-shown) concentrate dosage system. However, it has appeared in practice that, in spite of the fact that there is supplied concentrate to the animals in the milk box 5, a number of animals is less inclined to enter said milk box. For the purpose of luring also these animals to the milk box 5, in the trough 14 there is not only supplied concentrate but, via a (non-shown) mixing device, there is added thereto a lure substance, in the present embodiment constituted by treacle. It has appeared that the animals react very positively thereon and that also animals that did not or not regularly visit the milk box 5, lured by the lure substance, start visiting the milk box 5 more frequently.

Before the animal is milked by means of the milking robot 6, it is identified by a (non-shown) animal identification system by means of the transponder 41. During milking, the heartbeat, the blood pressure and the temperature of the animal are measured by means of the medical instrument 36 and compared with the average value inputted beforehand per animal and per parameter. When one of the aforementioned parameters deviates too much from the average value, this is stated on an attention list, in order to enable the farmer to inspect the animal or to consult the veterinary. Moreover, by means of the sensor 39 the physical state of the animal's legs is measured and, when the latter show a defect, this is also stated on the attention list. After the milking of the animal has finished and the teat cups 8 have been disconnected, the exit door 13 is opened and the animal can leave the milk box 5. Whether or not the animal has left the milk box is ascertained by means of the animal identification system.

## Claims

1. A construction including an implement for milking animals, such as cows, provided with a milk box (2), **characterized in that** the construction comprises an implement for treating an animal with insecticide and/or skin care means, said implement comprising registration means by means of which there is recorded which animal has been treated with the insecticide and/or skin care means and which animal, on the basis of these data, will be treated again.

2. A construction as claimed in claim 1, **characterized in that** the implement for treating the animal comprises a spraying device disposed in or near the milk box (2).

3. A construction as claimed in claim 1 or 2, **characterized in that** an animal is treated with insecticide and/or skin care means prior to being milked in the milk box.

4. A construction as claimed in any one of the preceding claims, **characterized in that** the construction comprises a milking robot (6) for automatically connecting teat cups (8) to the teats of an animal to be milked.

## Patentansprüche

1. Vorrichtung mit einem Gerät zum Melken von Tieren, wie zum Beispiel Kühe, ausgestattet mit einer Melkbox (2), **dadurch gekennzeichnet, dass** die Vorrichtung ein Gerät zum Behandeln eines Tieres mit Insektizid und/oder Hautpflegemitteln umfasst, wobei das Gerät eine Registriervorrichtung umfasst, mittels der aufgezeichnet wird, welches Tier mit dem Insektizid und/oder den Hautpflegemitteln behandelt wurde und welches Tier auf der Grundlage dieser Daten wieder behandelt werden wird.

2. Vorrichtung nach Anspruch 1, **dadurch gekennzeichnet, dass** das Gerät zum Behandeln des Tieres eine Sprühvorrichtung umfasst, welche in oder nahe der Melkbox (2) angeordnet ist.

3. Vorrichtung nach Anspruch 1 oder 2, **dadurch gekennzeichnet, dass** ein Tier mit Insektizid und/oder Hautpflegemitteln behandelt wird, bevor es in der Melkbox gemolken wird.

4. Vorrichtung nach einem der vorhergehenden Ansprüche, **dadurch gekennzeichnet, dass** die Vorrichtung einen Melkroboter (6) zum automatischen Anschließen der Zitzenbecher (8) an die Zitzen eines zu melkenden Tieres umfasst.

## Revendications

1. Construction comprenant un instrument pour traire des animaux, tels que des vaches, pourvue d'un box de traite (2), **caractérisée en ce que** la construction comprend un instrument pour traiter un animal avec un insecticide et/ou des moyens de soin cutané, ledit instrument comprenant des moyens d'enregistrement grâce auxquels un enregistrement est réalisé de l'animal qui a été traité avec l'insecticide et/ou les moyens de soin cutané et de l'animal, sur la base de ces données, qui sera traité à nouveau.

2. Construction selon la revendication 1, **caractérisée en ce que** l'instrument pour traiter l'animal comprend un dispositif de pulvérisation disposé dans le box de traite (2) ou près de celui-ci.

3. Construction selon la revendication 1 ou 2, **caractérisée en ce qu'**un animal est traité avec l'insecticide et/ou les moyens de soin cutané avant d'être trait dans le box de traite.

4. Construction selon l'une quelconque des revendications précédentes, **caractérisée en ce que** la construction comprend un robot de traite (6) pour relier automatiquement des gobelets trayeurs (8) aux trayons d'un animal destiné à être trait.
